# EUROPEAN PATENT SPECIFICATION

(11) **EP 2 429 161 B1**
(45) Date of publication and mention of the grant of the patent: **02.10.2019**
(21) Application number: 09848641.8
(22) Date of filing: 21.12.2009
(51) Int. Cl.: H04M 3/51

(54) **BACKGROUND SERVICE PROCESS UNIT, CALL CENTER POSITION SYSTEM AND CALL CONTROL METHOD THEREOF**
HINTERGRUND-SERVICEPROZESS-EINHEIT, CALL-CENTER POSITION SYSTEM UND ANRUFSTEUERUNGSVERFAHREN DAFÜR
UNITÉ DE TRAITEMENT DE SERVICE DE FOND, SYSTÈME DE POSITION DE CENTRE D'APPELS ET PROCÉDÉ D'APPEL CORRESPONDANT

(30) Priority: 26.08.2009 CN 200910169360
(43) Date of publication of application: 14.03.2012
(73) Proprietor: ZTE Corporation, Shenzhen, Guangdong 518057 (CN)
(72) Inventor: ZHONG, Jun, Shenzhen Guangdong 518057 (CN)
(74) Representative: Aipex B.V.
(86) International application number: PCT/CN2009/075785
(87) International publication number: WO 2011/022909

(56) References cited:
- WO-A1-03/081444
- CN-A- 1 725 689
- CN-A- 101 415 048
- US-A1- 2001 038 624
- US-A1- 2003 035 532
- US-A1- 2004 228 469
- US-A1- 2005 138 183

## Description

### Technical Field

The present invention relates to network communication and call center application technology, and especially to a background service process unit and a call control method thereof. The features of the preamble of the independent claims 1 and 8 are known from WO 03/081444 A1.

### Background of the Related Art

Along with the high-speed development of internet, IP based internet gradually becomes a necessary tool in daily work and life of people, and a browser has been widely used by various users as the most important tool for people to access internet information.

A browser is easily obtained as a fundamental function software, and various browsers commonly have extensibility. The software implemented based on browsers are bound to have a certain advantage on easy deployment, high extensibility.

The existing position system usually uses a program structure of client/server (C/S) model. Along with the migration of a common telephone network to an IP network, the advantages of several networks merge with each other. The disadvantages of the existing call center position system on deployment, maintenance, reliability and other aspects become more and more apparent, which are specifically as follows:
1) not easy to deploy: the existing position system uses a conventional software release manner, which needs manual installation and configuration, and thus is time consuming and laborious.
2) not easy to maintain: each position system is a separate copy and must be configured respectively since deployment is made in installation manner. Once the program is exceptional and needs to be replaced or its configuration needs to be adjusted, labor power has to be spent to process the machines one by one.
3) weak reliability: the service logic and call control are tightly bound with each other since no hierarchical design is used, and once a service module is in trouble, the call will be caused to end exceptionally.

### Summary of the Invention

The present invention provide a background service process unit according to claim 1 and a method according to claim 8 for call control thereof, enabling a customer representative to login to a CTI server and process a call through a browser in a common computer host by installing a background server process unit in the common computer host.

The technical scheme of the invention comprises:
a background service process unit according to claim 1, comprising a protocol stack module, a state machine module and a service end access interface module, wherein,
the protocol stack module, connected to a CTI server and an automatic call distributor (ACD), is used to send and receive a TSAPI message and a SIP message, parse a result of message sending and content of a received message, and deliver an parsed message to the state machine module for processing;
the state machine module, interfaced with the service end access interface module, is used to provide validity detection for an operation of a customer representative according to a position state and/or a call state, and maintain the position state and the call state according to a TSAPI message and a SIP message that have been received;
the service end access interface module is used to provide interfaces of position state and call state control for the customer representative.

Preferably, the protocol stack module specifically comprises a TSAPI protocol stack module and a SIP protocol stack module, and the state machine module specifically comprises a position state machine module and a call state machine module; wherein,
the TSAPI protocol stack module, connected to a CTI server through an IP network, is used to create and release a TSAPI connection, send and receive a TSAPI message, parse an acknowledgment of message sending and content of a received message, and deliver a parsed message to the position state machine module for further processing;
the SIP protocol stack module, connected to the automatic call distributor through an IP network, is used to send and receive a SIP message, parse the received SIP message and deliver the parsed SIP message to the call state machine module for further processing;
the position state machine module is used to maintain the state of a position according to a received TSAPI message, and provide control and query of the position state;
the call state machine module is used to maintain the state of a call according to a TSAPI message and a SIP message that have been received, provide call state query, call control operation and operation validity detection.

Preferably, the background service process unit further comprises:
a FTP protocol stack module, used to provide FTP file transfer ability;
an update detection module, communicating with the service end access interface module and the FTP protocol stack module, used to inquire a FTP server regularly through the FTP protocol stack module, check whether a position software has an update, and if an update is discovered, initiate a FTP operation to download the update and register a new position software.

Preferably, the background service process unit further comprises:
a RTP protocol stack module, used to send and receive media stream packets under control of the SIP protocol stack module, and deliver received media data to a media encoding and decoding module for processing;
a media encoding and decoding module, communicating with the RTP protocol stack module and responsible for encoding and decoding operations of the media data, used to, after a voice captured by a voice capturing device is converted into digital signals by a voice card, perform encoding compression to the digital signals obtained after the conversion, encapsulate the digital signals after the encoding compression into a RTP message, which is then sent to a correspondent node through the RTP protocol stack module, and deliver decoded data streams to the voice card for restoring and synthesizing and playback through a voice playback device.

Preferably, the background service process unit further comprises:
a data access client module, communicating with the service end access interface module, used to provide access function of a position system database for the customer representative after the customer representative initiates a data query operation through an operation web page;
the service end access interface module is further used to provide an access interface of the position system database for the customer representative.

A browser based position system, comprises a browser and a background service process unit, wherein,
the browser is used to send an operation request according to a customer representative to the background service process unit through an operation page, the browser comprises an interface access object, which is used to send the operation request from the customer representative to a service end access interface module of the background service process unit;
the background service process unit, connected to a CTI server and an automatic call distributor, is used to receive the operation request, judge whether the operation can be performed currently, if yes, send the operation request to the CTI server through a TSAPI protocol, and make a corresponding switching to a position state after receiving an operation completion notification message sent by the CTI server;
the CTI server forwards the received operation request to the automatic call distributor for performing, and forwards, after the performing is completed, the operation completion notification message sent by the automatic call distributor to the background service process unit.

The browser is further used to send a login request from the customer representative to the background service process unit through a login page, and switch a current login page to the operation page after receiving a returned login result message;
the background service process unit is further used to receive the login request, judge whether the customer representative can perform a login operation currently, if yes, then initiate a TSAPI protocol registration to the CTI server, and set a corresponding position state and initiate a SIP protocol registration to the automatic call distributor after the TSAPI protocol registration is successful, and set a corresponding call state and send a login result to the login page opened by the customer representative after the SIP protocol registration is successful.

A method according to claim 8 for call control of a browser based position system comprises steps:
A, a browser sending an operation request according to a customer representative to a background service process unit through an operation page;
B, the background service process unit receiving the operation request, and judging whether the operation can be performed currently, if yes, sending the operation request to a CTI server;
C, the CTI server forwarding the received operation request to an automatic call distributor for performing, and forwarding an operation completion notification message sent by the automatic call distributor to the background service process unit after the operation request is performed completely;
D, the background service process unit making a corresponding switching to a position state according to the received operation completion notification message.

The specific process for the automatic call distributor to perform the operation are as follows:
after receiving the operation request, the automatic call distributor sending a corresponding operation command to the background service process unit through a SIP protocol;
after receiving the operation command, the background service process unit performing a corresponding media stream control operation, and making a corresponding switching to a call state, thereafter returning an operation completion confirmation message to the automatic call distributor through the SIP protocol;
after receiving the operation completion confirmation message, the automatic call distributor sending an operation completion notification message to the CTI server.

Preferably, before the step A, the method further comprises the following steps:
the browser sending a login request of the customer representative to the background service process unit through a login page;
the background service process unit receiving the login request, and judging whether the customer representative can perform a login operation currently, if yes, initiating a TSAPI protocol registration to the CTI server, setting a corresponding position state and initiating a SIP protocol registration to the automatic call distributor after the TSAPI protocol registration is successful, and setting a corresponding call state and sending a login result to the login page which is opened by the position after the SIP protocol registration is successful.

Preferably, after receiving the login request, when the background service process unit judges whether the customer representative can perform the login operation currently, if the background service process unit discovers the customer representative is currently in a conversation state and a current service session is not connected to the customer representative, the background service process unit returns a message for prompting whether to connect to the service session to the login page, and when receiving a returned connection request, the background service process unit recreates a connection for the service session.

The advantages of the invention are as follows:
the technical scheme of the invention enables a customer representative to login to a CTI server and process a call through a browser in a common computer host by simply downloading a background server process unit into the common computer host at the first access. The technical scheme of the invention gives full display of the advantages of easy deployment and high extensibility of a browser, and meanwhile solves the reliability problem of the browser through a design of software structure, thereby realizing a browser based position system with easy deployment, high reliability and high extensibility. The position system has the following desirable characteristics:

### 1) Easy deployment

By using the browser based position system, the time and labor expense spent on release, installation, maintenance of software are saved, and the operation maintenance cost is greatly reduced. Since the installation and deployment conditions are very low, the position system is adapted to most computer systems (desktop computers, notebook computers, UMPC and so on), and is also adapted to part of intelligent products (such as smart phones), thus realizing cross-platform features.

### 2) High reliability

A conventional position system uses a framework based program structure, and a call control module and a business process module are not differentiated based on importance, thus causing an important call module to be influenced easily by a secondary module, or even causing a call to be interrupted exceptionally. In the software structure of the position system, the data and program modules are differentiated based on importance during running, and important data are placed in separate processes, thereby ensuring the safety of core programs, and improving the reliability of the whole software structure of the position system.

### 3) High extensibility

The position system reduces the limitation conditions for web services, and thus makes the development and customization of web services more flexible.

In addition, the background service process unit in the position system includes automatic update mechanism. When the software structure of a position system needs to upgrade, an automatic upgrade could be done only by placing a new edition on the FTP server. Since software automatic upgrade is adopted, the synchronicity and timeliness of software upgrade are ensured, thereby accelerating the tempo for fault response and requirement implementation, and greatly improving use experience of users and enhancing user satisfaction.

### Brief Description of Drawings

FIG.1 is a structure block diagram of the background service process unit of the invention;
FIG.2 is a structure block diagram of a browser based position system;
FIG.3 is a timing sequence flowchart of the method for realizing position login through the browser based position system of the invention;
FIG.4 is a timing sequence flowchart of the method for realizing position call control through the browser based position system of the invention;
FIG.5 is a timing sequence flowchart of the method for realizing exception situation recovery through the browser based position system of the invention.

### Preferred Embodiments of the Present Invention

The core concept of the invention is that a customer representative is able to login to the computer telephony integration (CTI) server and process a call only through a browser by installing a background server process unit in the host of the position side. The core of using the background service process as the backbone of a browser based position system is that the various function modules within the position system are differentiated based on importance, and modules with different importance are isolated from each other in different processes and are not influenced by each other according to isolation mechanism, i.e., programs and data in different processes are isolated physically.. The reliability of an important module is prevented from being reduced due to influence of an unimportant module on the important module, thereby ensuring the reliability of the whole position system.

The specific implementation process of the invention will be further described in detail below with reference to all the accompanying drawings.

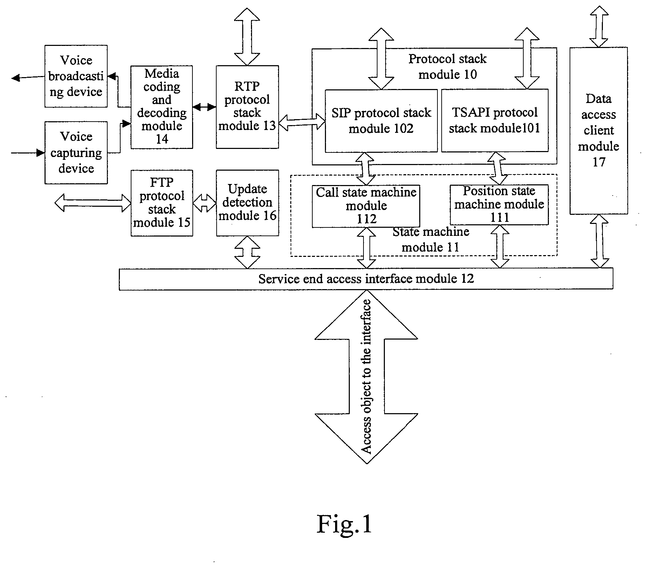

Please refer to FIG.1, it is a structure block diagram of the background service process unit 100 of the invention, which mainly includes a protocol stack module 10, a state machine module 11 and a service end access interface module 12, wherein,
the protocol stack module 10, connected to a CTI server and an automatic call distributor (ACD), is used to send and receive a telephony service application programming interface (TSAPI) message and a session initiation protocol (SIP) message, analyze the result of message sending and the content of a received message, and deliver an analyzed message to the state machine module for processing;
the state machine module 11, connected to the service end access interface module, is used to provide validity detection for an operation of a customer representative according to a position state and/or a call state, and maintain the position state and call state according to received TSAPI message and SIP message;
the service end access interface module 12 is used to provide interfaces of position state and call state control for the customer representative.

Specifically, the protocol stack module 10 specifically comprises a TSAPI protocol stack module 101 and a SIP protocol stack module 102, and the state machine module 11 specifically comprises a position state machine module 111 and a call state machine module 112; wherein,
the TSAPI protocol stack module 101, connected to a CTI server through an IP network, is used to create and release a TSAPI protocol, send and receive a TSAPI message, parse the acknowledgment of message sending and the content of a received message, and deliver an parsed message to the position state machine module for processing;
the SIP protocol stack module 102, connected to the automatic call distributor through an IP network, is used to send and receive a SIP message, parse a received SIP message and deliver the parsed SIP message to the call state machine module for processing;
the position state machine module 111 is used to maintain the state of a position according to a received TSAPI connection, and provide control and query of the position state;
the call state machine module 112 is used to maintain the state of a call according to the received TSAPI message and SIP message, provide call state query, call control operation and operation validity detection.

Furthermore, the background service process unit further comprises:
a real-time transport protocol (RTP) protocol stack module 13, used to send and receive media stream packets, and deliver received media data to the media encoding and decoding module 14 for processing; the start and stop of the sending and receiving processes of the media stream data being controlled by the SIP protocol stack;
a media encoding and decoding module 14, communicating with the RTP protocol stack module 13 and responsible for encoding and decoding operations of media data, used to, after a voice captured by a voice capturing device is converted into digital signals by a voice card, perform encoding compression to the digital signals obtained after the conversion, encapsulate the digital signals after the encoding compression into a RTP message, which is then sent to a correspondent node through the RTP protocol stack module 13, and deliver decoded data streams to the voice card for restoring and synthesizing and playback through a voice playback device.

To realize the automatic upgrade of a client (position) software and ensure the synchronization and timeliness of software upgrade, the background service process unit may further comprise:
a file transfer protocol (FTP) protocol stack module 15, used to provide FTP file transfer ability, realize automatic update of a position software, download of voice for reporting employ ID numbers, uploading of recording files and other functions;
an update detection module 16, communicating with the service end access interface module 12 and the FTP protocol stack module 15, used to inquire a FTP server regularly through the FTP protocol stack module 15, check whether a position software has an update, and if an update is discovered, initiate a FTP operation to download the update and register a new position software.

To provide the access function of the position system database, the service end access interface module 12 is further used to provide an access interface of the position system database, and the background service process unit may further comprise:
a data access client module 17, communicating with the service end access interface module 12, used to provide access function of a position system database for the customer representative through the service end access interface module 12 after the customer representative initiates a data query operation through the operation page.

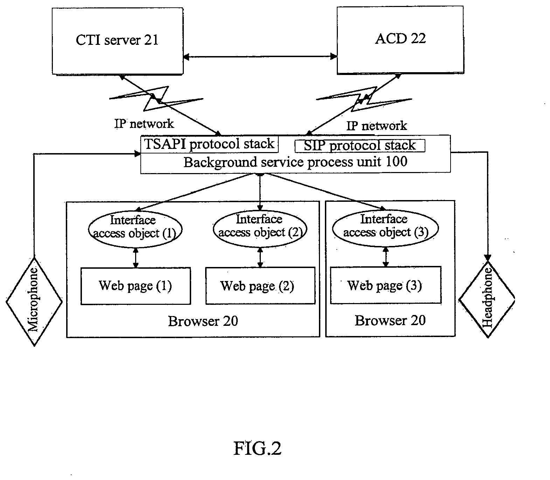

Please see FIG.2, the diagram is a structure block diagram of a browser based position system. The position system enables a customer representative to login to a CTI server and process a call through a browser by installing the background server process unit shown in FIG. 1 on the host of the position side. The position system mainly comprises a browser 20 and a background service process unit 100, wherein,
the browser 20 is used to send a call operation request of a customer representative to the background service process unit through an interface access object using an opened web operation page, and show to the customer representative the operation result or operation completion notification returned by the background service process unit through the interface access object. Wherein,
the web operation page is used to implement a specific service flow, control a call and other objects to complete a specific service by invoking a service from the background service process unit;
the interface access object is used to provide an access interface of the background service process unit, which is created by a web operation page needing to use the background service progress function and run in the process of the web operation page, and between which and the service end access interface of the background service process unit an operation request initiated by the web operation page is delivered through the process;
the background service process unit 100 is used to receive the call operation request, judge whether the operation can be performed currently, if yes, send the call operation request to the CTI server through a TSAPI protocol; after receiving an operation initiation confirmation message sent by the CTI server, make a corresponding switching to the position state, and send a corresponding operation result to the operation page currently opened by a position; after receiving a call operation command sent by the ACD, perform a corresponding media stream control operation, and make a corresponding switching to the call state, thereafter return to the ACD an operation completion confirmation message through SIP protocol; after receiving the operation completion notification message sent by the CTI server, make a corresponding switching to the position state, and send an operation completion notification message to the operation page opened currently by the position.

After receiving the call operation request, the CTI server 21 returns to the background service process unit an operation initiation confirmation message, and meanwhile forwards the call operation request to the ACD 22 for performing; and after the ACD 22 finishes the call operation, forwards the operation completion notification message sent by the ACD 22 to the background service process unit 100.

After receiving the call operation request sent by the CTI server 21, the ACD 22 sends a corresponding call operation command to the background service process unit 100 through the SIP protocol, and sends to the CTI server 21 an operation completion notification message after receiving the operation completion confirmation message returned by the background service process unit 100.

Furthermore, during the login process of a position,
the browser 20 is further used to send a login request of a customer representative to the background service process unit 100 through an opened web login page, and switch the current web login page to a web operation page after receiving a returned login result message;
the background service process unit 100 is further used to receive a login request sent by a customer representative through a browser, judge whether the customer representative can perform the login operation currently, if yes, initiate a TSAPI protocol registration to the CTI server 21, and set a corresponding position state and initiate a SIP protocol registration to the ACD 22 after the TSAPI protocol registration is successful, and set a corresponding call state and return a login result to the web login page opened by the customer representative after the SIP protocol registration is successful.

After receiving the login request sent by the customer representative through the browser, when the background service process unit 100 judges whether the customer representative can perform the login operation currently, if the background service process unit discovers the customer representative is currently in a conversation state and the current service session is not connected to a position, the background service process unit returns a message for prompting whether to connect to the service session to the opened login page, and when receiving a returned connection request, the background service process unit recreates a connection for the service session.

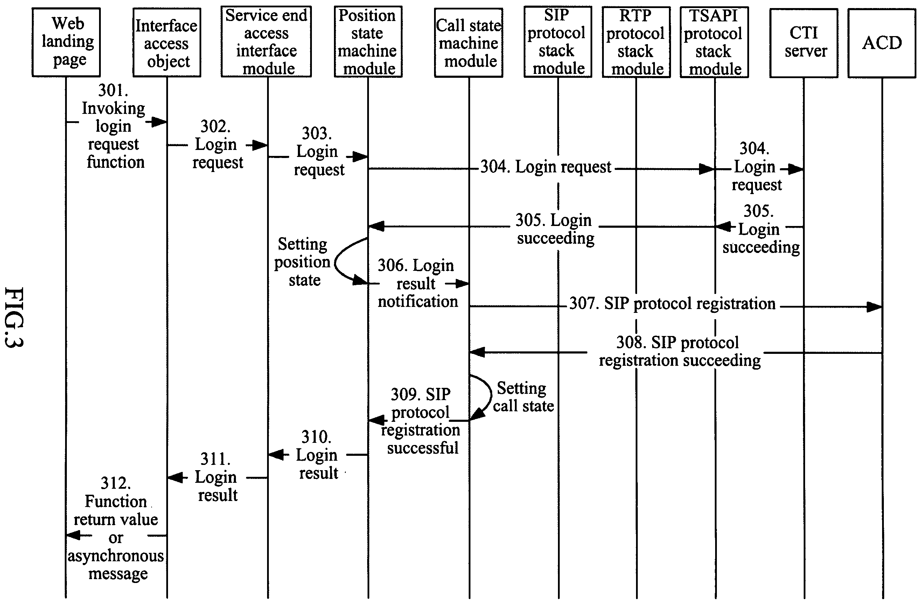

Please see FIG.3, the diagram is a timing sequence flowchart of the method for realizing position login through the browser based position system of the invention, which mainly includes the following steps.

Step 301, a customer representative opens a browser of a position host, and enters the uniform resource locator (URL) address of a call center web server, and then opens a corresponding web login page and enters an account and a password to login according to the prompt on the web login page, and the web login page delivers a login request to an interface access object through invoking.

Step 302, the interface access object then delivers the login request to a service end access interface module of a background service process unit through inter-process communication.

Step 303, the service end access interface module analyzes the login request and gives it to a position state machine module for processing.

Step 304, the position state machine module checks whether the current position state can perform a login operation, for example, checking whether the state of the position state machine module is already in a login state, if yes, it is not allowed to re-login. The specific checking logic is determined according to the practical software requirements. If it is confirmed that the current position state is able to perform the login operation, the position state machine module invokes a TSAPI protocol stack module to send the login request to a CTI server.

Step 305, the CTI server responds to the TSAPI protocol stack module with a login success message, and the TSAPI protocol stack module analyzes the message and sends the analyzed message to the position state machine module for processing.

Step 306, the position state machine module analyzes the content of the message and judges that the login is successful, and then sets a corresponding position state, and simultaneously informs a call state machine module of the login result.

Step 307, the call state machine module initiates a SIP protocol registration to a ACD after receiving a notification from the position state machine module.

Step 308, the ACD confirms the success of the SIP protocol registration and sends a SIP protocol registration success message to the call state machine module.

Step 309, after receiving the SIP protocol registration success message, the call state machine module sets a corresponding call state, and informs the position state machine module of the SIP protocol registration success message.

Step 310, after receiving the notification from the call state machine module, the position state machine module confirms that logins to the CIT server and the ACD are both successful, and then determines that the whole login process is successful, and returns the login result to the service end access interface module.

Step 311, the service end access interface module returns the login result to the interface access object through inter-process communication.

Step 312, the interface access object delivers the login result to the web login page through a function return value or an asynchronous message; the web login page switches to a corresponding web operation page according to the login result.

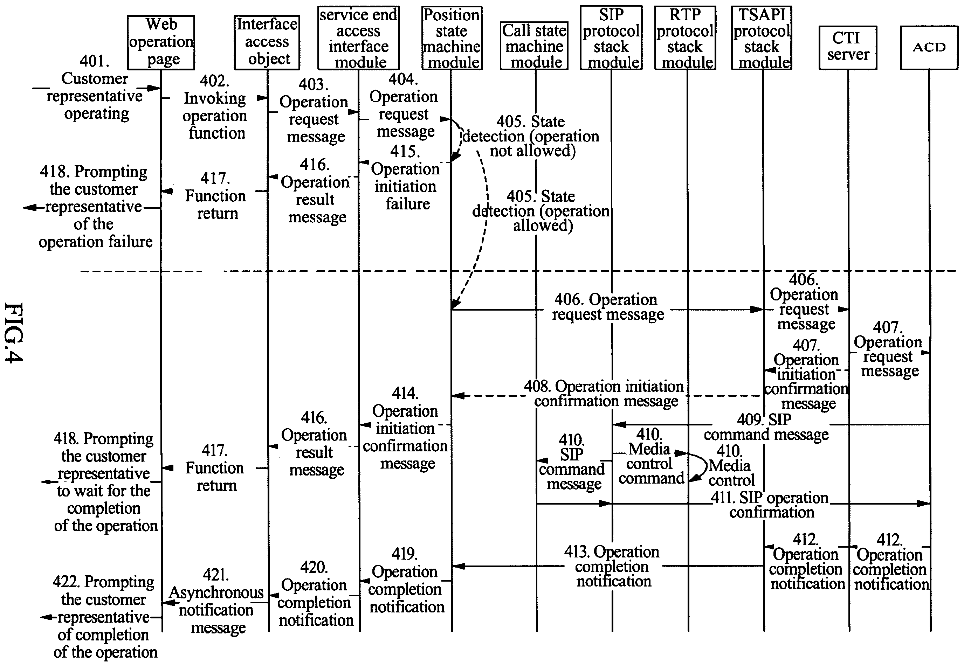

Please see FIG.4, the diagram is a timing sequence flowchart of the method for realizing position call control through the browser based position system of the invention, which mainly includes the following steps.

Step 401, a customer representative performs a call control, such as holding, transferring, hanging up and so on, by clicking an operation button in a web operation page.

Step 402, the web operation page converts the operation of the customer representative to an operation request and sends to an interface access object through function invoking, and waits for function return.

Step 403, the interface access object delivers the operation request to a service end access interface module of the background service process unit through inter-process communication, the operation request including operation instructions, parameters and other information.

Step 404, the service end access interface module analyzes the received operation instructions, and judges by which module the instructions should be processed, and the call operation herein is given to a position state machine module for processing.

Step 405, the position state machine module makes an entrance test for the operation request: according to its own state and through inquiring the state of a call state machine module, it judges whether the call operation can be performed currently and checks whether parameters are valid, for example: a response operation is allowed to perform only when the position state machine module is in idle state and the call state machine module is in ringing state. The logical judgment in this section may be determined according to a specifically performed call operation. If the call operation is not allowed to perform, or parameters are wrong, the position state machine module will skip to step 415 to perform error processing.

Step 406, if the entrance test of the position state machine module is passed, the position state machine module invokes a TSAPI protocol stack module to send a call operation request to a CTI server.

Step 407, after receiving the call operation request, the CTI server returns to the TSAPI protocol stack module an operation initiation confirmation message, and simultaneously sends the call operation request to an ACD for processing.

Step 408, after receiving the operation initiation confirmation message, the TSAPI protocol stack module analyzes the message format, and delivers an analyzed message to the position state machine module for processing. Skip to step 414.

Step 409, after receiving the call operation request, the ACD sends a corresponding SIP command message to the SIP protocol stack module according to the operation instructions.

Step 410, after receiving the SIP command message, the SIP protocol stack module, according to the operation instructions, sends a corresponding media stream control instruction to a RTP protocol stack module, such as initiating the media stream, stopping the media stream, switching the media stream and so on, and simultaneously informs the call state machine module of the SIP command message.

Step 411, after receiving the SIP command message, the call state machine module makes a corresponding switching to the call state, and instructs the SIP protocol stack module to return an operation completion SIP confirmation message to the ACD.

Step 412, after receiving the SIP confirmation message, the ACD confirms the completion of the call operation, and sends an operation completion notification message to the CTI server, which then sends the operation completion notification message to the TSAPI protocol stack module.

Step 413, after receiving the operation completion notification message, the TSAPI protocol stack module analyzes the message and sends the analyzed message to the position state machine module for processing. Skip to step 419.

Step 414, after receiving the operation initiation confirmation message, the position state machine module makes a corresponding switching to the position state, and sends the operation result message (ACK) of the operation initiation confirmation to the service end access interface module. Skip to step 416.

Step 415, the position state machine module generates error codes according to the reason of failure, and sends the operation result message (NACK) of the failure of operation initiation to the service end access interface module.

Step 416, the service end access interface module sends the operation result message to the interface access object through inter-process communication.

Step 417, the function invoking of the interface access object by the web operation page in step 402 is ended and returned under the control of the interface access object, and the interface access object delivers the operation result to the web operation page through a function return value.

Step 418, according to the operation result returned by the function, the web operation page prompts the customer representative reasons of failure if the operation fails, and may instruct the customer representative to wait for the completion of the operation if the operation is successful, which suggests that the operation is initiated successfully but not yet completed.

Step 419, after receiving the operation completion notification message, the position state machine module makes a corresponding switching to the position state, and sends the operation completion notification message to the service end access interface module.

Step 420, the service end access interface module sends the operation completion notification message to the interface access through by inter-process communication.

Step 421, after receiving the operation completion notification message, the interface access object informs the web operation page through an asynchronous event.

Step 422, the web operation page prompts the customer representative of successful completion of the operation.

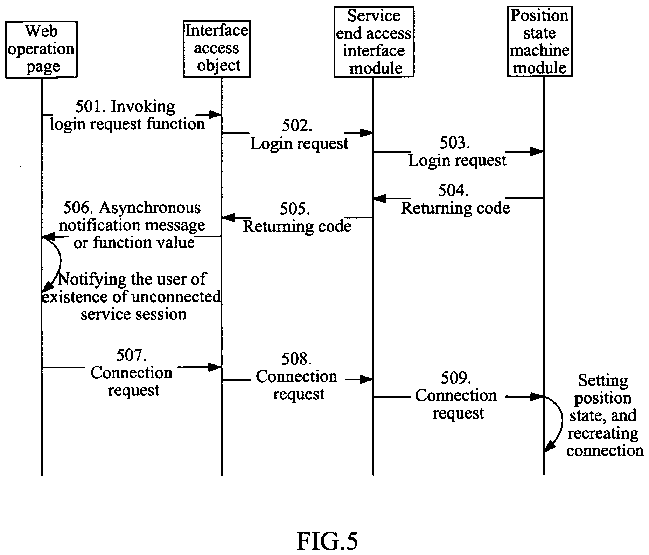

Please see FIG.5, the diagram is a timing sequence flowchart of the method for realizing exception situation recovery through the browser based position system of the invention, which mainly includes the following steps.

Step 501, a browser breaks down when a customer representative is on a call, the customer representative continues to maintain the call with a user, and simultaneously opens a browser of a position host, enters the URL address of a call center web server, opens a web login page, and enters an account and a password to login according to the prompt in the web login page, and then the web login page sends a login request to an interface access object through invoking.

Step 502, the interface access object delivers the login request to the service end access interface module of the background service process unit through inter-process communication.

Step 503, the service end access interface module analyzes the login request and sends it to a position state machine module for processing.

Step 504, the position state machine module checks whether the current position state can perform the login operation, and when detecting that it is in a conversation state currently and the current service session is not connected to any position, it returns a code to the service end access interface module to indicate that an unconnected service session currently exists and whether to connect to the session.

Step 505, the service end access interface module returns the code to the interface access object through inter-process communication.

Step 506, the interface access object delivers, through a function return value or an asynchronous message, the code to the web login page, which then prompts the customer representative of whether to connect to the service session according to the returned code.

Step 507, if the customer representative determines to connect to the service session, the web login page delivers a connection request to the interface access object.

Step 508, the interface access object then delivers the connection request to the service end access interface module through inter-process communication.

Step 509, the service end access interface module gives the connection request to the position state machine module for processing, and the position state machine module reconfigures the position state and simultaneously recreates the connection.

In the example of the invention, important state management (position state, call state), important control message processing related to calls (SIP message, TSAPI message) and important processing related to the media (RTP transportation, media information encoding and decoding) are located in the background service process unit and are isolated from the secondary service processing logic (web page) with high failure rate, thereby ensuing the reliability of the whole position system. The reliability may also be subdivided into the continuity of connection, i.e. the position system will not cause a customer representative to quit from the CTI because of the exception of a web page, and the continuity of conversation, i.e. the conversation between a customer representative and a user will not be interrupted because of the exception of the web page.

With regard to the continuity of connection, when the web page quits exceptionally, the TSAPI protocol stack still continues to process TSAPI messages since the position state is located in the background service progress, thus making the connection of the position to the CTI still maintain valid. The web page could obtain the position state and proceed with the operation just by reconnecting to the background service progress after being reset.

With regard to the continuity of conversation, when the web page quits exceptionally, the SIP protocol stack still processes SIP messages since the call state is located in the background service progress, and the media process module still collects continually the voice codes of the customer representative and sends them to the user end, and meanwhile receives continually voice data from the user end through RTP, and restores with a sound card after decoding, thus enabling the customer representative to still hear the user's voice, and enabling the conversation to continue with no influence of exception situation of the web page. The web page could proceed to perform control operation to the call just by reconnecting to the background service progress after the web page is reset.

Obviously, those skilled in the art may make various modifications and variations to the invention without deviating from the scope of the invention. Thus, the invention is also intended to include these modifications and variations if these modifications and variations of the invention are within the scope of the claims.

## Claims

1. A background service process unit (100) for a browser based call center position system, **characterized by**, comprising a protocol stack module (10), a state machine module (11), a service end access interface module (12) and a real-time protocol, RTP, protocol stack module (13), wherein
the protocol stack module (10), connected to a computer telephony integration, CTI, server and an automatic call distributor, ACD, is configured to send and receive a telephony service application programming interface, TSAPI, message and a session initiation protocol, SIP, message, analyze a result of message sending and content of a received message, and deliver an analyzed message to the state machine module (11) for processing;
the state machine module (11), interfaced with the service end access interface module (12), is configured to provide validity detection for an operation of a customer representative according to a position state and/or a call state, and maintain the position state and the call state according to the TSAPI message and the SIP message that have been received;
the service end access interface module (12) is configured to provide interfaces of position state and call state control for the customer representative;
wherein the protocol stack module (10) comprises a TSAPI protocol stack module (101) and a SIP protocol stack module (102), and the state machine module (11) comprises a position state machine module (111) and a call state machine module (112), the TSAPI protocol stack module (101) is connected to the CTI server, and the SIP protocol stack module (102) is connected to the ACD,
the service end access interface module (12) is specifically configured to receive a call operation request;
the position state machine module (111) is configured to judge whether an operation of the call operation request can be performed currently, if yes, send the call operation request to the CTI server through the TSAPI protocol stack module (101);
the position state machine module (111) is also configured to, after receiving an operation initiation confirmation message sent by the CTI server, make a corresponding switching to the position state, and send a corresponding operation result to an operation page currently opened by a position through the service end access interface module (12);
the SIP protocol stack module (102) is configured to, after receiving a call operation command sent by the ACD, send a corresponding media stream control instruction to the RTP protocol stack module (13), and simultaneously inform the call state machine module of the call operation command;
the RTP protocol stack module (13) is configured to, after receiving the media stream control instruction, perform a corresponding media stream control operation;
the call state machine module (112) is configured to, after receiving the call operation command, make a corresponding switching to the call state, thereafter return to the ACD an operation completion confirmation message through the SIP protocol stack module (102);
the TSAPI protocol stack module (101) is configured to, after receiving the operation completion notification message sent by the CTI server, make a corresponding switching to the position state, and send an operation completion notification message to the operation page opened currently by the position through the service end access interface module.

2. The background service process unit according to claim 1, wherein
the TSAPI protocol stack module (101) is connected to the CTI server through an IP network, is also configured to create and release a TSAPI connection, send and receive a TSAPI message, analyze an acknowledgment of message sending and content of a received message, and deliver an analyzed message to the position state machine module for processing;
the SIP protocol stack module (102) is connected to the ACD through an IP network, is also configured to send and receive a SIP message, analyze the received SIP message and deliver the analyzed SIP message to the call state machine module for processing;
the position state machine module (111) is also configured to maintain the state of a position according to a received TSAPI message, and provide control and query of the position state;
the call state machine module (112) is also configured to maintain the state of a call according to a TSAPI message and a SIP message that have been received, provide call state query, call control operation and operation validity detection.

3. The background service process unit according to claim 1 or 2, wherein the background service process unit further comprises: a file transfer protocol, FTP, protocol stack module (15) and an update detection module (16); wherein
the FTP protocol stack module (15), configured to provide FTP file transfer ability;
the update detection module (16), communicating with the service end access interface module (12) and the FTP protocol stack module (15), configured to inquire an FTP server regularly through the FTP protocol stack module (15), check whether a position software has an update, and if an update is discovered, initiate an FTP operation to download the update and register a new position software.

4. The background service process unit according to claim 2, wherein the background service process unit further comprises a media encoding and decoding module (14); wherein
the RTP protocol stack module (13) is also configured to send and receive media stream packets under control of the SIP protocol stack module (102), and deliver received media data to a media encoding and decoding module (14) for processing;
the media encoding and decoding module (14), communicating with the RTP protocol stack module (13) and responsible for encoding and decoding operations of the media data, configured to, after a voice captured by a voice capturing device is converted into digital signals by a voice card, perform encoding compression to the digital signals obtained after the conversion, encapsulate the digital signals after the encoding compression into a RTP message, which is then sent to a correspondent node through the RTP protocol stack module (13), and deliver decoded data streams to the voice card for restoring and synthesizing and playback through a voice playback device.

5. The background service process unit according to claim 1 or 2, wherein the background service process unit further comprises:
a data access client module (17), communicating with the service end access interface module (12), configured to provide access function of a position system database for the customer representative after the customer representative initiates a data query operation through an operation page;
the service end access interface module (12) is further configured to provide an access interface of the position system database for the customer representative.

6. A browser based call center position system, comprising a browser (20), a computer telephony integration, CTI server (21), an automatic call distributor, ACD (22), and the background service process unit (100) according to anyone of claims 1-5, wherein
the browser (20) is configured to send a call operation request of a customer representative to the background service process unit (100) through an interface access object using an opened web operation page, and show to the customer representative the operation result or operation completion notification returned by the background service process unit (100) through the interface access object;
the CTI server (21) is configured to, after receiving the call operation request, return to the background service process unit (100) an operation initiation confirmation message, and meanwhile forward the call operation request to the ACD (22) for performing; and after the ACD (22) finishes the call operation, forward the operation completion notification message sent by the ACD (22) to the background service process unit (100);
the ACD (22) is configured to, after receiving the call operation request sent by the CTI server (21), send a corresponding call operation command to the background service process unit (100) through the SIP protocol, and send to the CTI server (21) an operation completion notification message after receiving the operation completion confirmation message returned by the background service process unit (100).

7. The browser based call center position system according to claim 6, wherein
during a login process of a position,
the browser (20) is further configured to send a login request of a customer representative to the background service process unit (100) through an opened web login page, and switch the current web login page to a web operation page after receiving a returned login result message;
the background service process unit (100) is further configured to receive a login request sent by a customer representative through a browser, judge whether the customer representative can perform the login operation currently, if yes, initiate a TSAPI protocol registration to the CTI server (21), and set a corresponding position state and initiate a SIP protocol registration to the ACD (22) after the TSAPI protocol registration is successful, and set a corresponding call state and return a login result to the web login page opened by the customer representative after the SIP protocol registration is successful;
the background service process unit (100) is further configured to after receiving the login request sent by the customer representative through the browser (20), when judging whether the customer representative can perform the login operation currently, if discover the customer representative is currently in a conversation state and the current service session is not connected to a position, return a message for prompting whether to connect to the service session to the opened login page, and when receiving a returned connection request, recreate a connection for the service session.

8. A method for call control of a browser based call center position system, **characterized by**, comprising the following steps:
A, a browser sending an operation request according to a customer representative to a background service process unit (100) through an operation page;
B, the background service process unit (100) receiving the operation request, and judging whether the operation can be performed currently, if yes, sending the operation request to a computer telephony integration, CTI, server (21); after receiving an operation initiation confirmation message sent by the CTI server (21), making a corresponding switching to the position state, and sending a corresponding operation result to the operation page;
C, the CTI server (21) forwarding the received operation request to an automatic call distributor, ACD (22), for performing, and forwarding an operation completion notification message sent by the ACD (22) to the background service process unit (100) after the operation request is performed completely;
D, the background service process unit (100) making a corresponding switching to a position state according to the received operation completion notification message, and sending an operation completion notification message to the operation page;
wherein in step C, the specific process for the ACD (22) to perform the operation are as follows: after receiving the operation request, the ACD (22) sending a corresponding operation command to the background service process unit (100) through a session initiation protocol, SIP, protocol; after receiving the operation command, the background service process unit (100) performing a corresponding media stream control operation, and making a corresponding switching to a call state, thereafter returning an operation completion confirmation message to the ACD (22) through the SIP protocol; after receiving the operation completion confirmation message, the ACD (22) sending an operation completion notification message to the CTI server (21).

9. The method according to claim 8, wherein, before the step A, the method further comprises the following steps:
the browser sending a login request of the customer representative to the background service process unit (100) through a login page;
the background service process unit (100) receiving the login request, and judging whether the customer representative can perform a login operation currently, if yes, initiating a telephony service application programming interface, TSAPI, protocol registration to the CTI server (21), setting a corresponding position state and initiating a SIP protocol registration to the ACD (22) after the TSAPI protocol registration is successful, and setting a corresponding call state and sending a login result to the login page which is opened by the position after the SIP protocol registration is successful.

10. The method according to claim 8 or 9, wherein after receiving the login request, when the background service process unit (100) judges whether the customer representative can perform the login operation currently, if the background service process unit (100) discovers the customer representative is currently in a conversation state and a current service session is not connected to the customer representative, the background service process unit (100) returns a message for prompting whether to connect to the service session to the login page, and when receiving a returned connection request, the background service process unit (100) recreates a connection for the service session.

## Patentansprüche

1. Hintergrund-Serviceprozess-Einheit (100) für ein browserbasiertes Call-Center-Position-System, **dadurch gekennzeichnet, dass** sie ein Protokollstapelmodul (10), ein Zustandsmaschinenmodul (11), ein serviceseitiges Zugangsschnittstellenmodul (12) und ein Protokollstapelmodul (13) für ein Echtzeitprotokoll, RTP, umfasst, wobei
das Protokollstapelmodul (10), das mit einem Server zur Rechner-Telefonie-Integration, CTI, und einer automatischen Anrufverteilung, ACD, verbunden ist, dazu konfiguriert ist, eine Nachricht einer Telefonie-Service-Anwendungsprogrammierschnittstelle, TSAPI, und eine Nachricht eines Sitzungsinitiierungsprotokolls, SIP, zu senden und zu empfangen, ein Ergebnis des Sendens der Nachricht und einen Inhalt einer empfangenen Nachricht zu analysieren und eine analysierte Nachricht an das Zustandsmaschinenmodul (11) zur Verarbeitung zu übermitteln;
das Zustandsmaschinenmodul (11), das mit dem serviceseitigen Zugangsschnittstellenmodul (12) gekoppelt ist, dazu konfiguriert ist, eine Gültigkeitserkennung für einen Vorgang durch einen Kundenbetreuer gemäß einem Positionszustand und/oder einem Anrufzustand bereitzustellen und den Positionszustand und den Anrufzustand gemäß der TSAPI-Nachricht und der SIP-Nachricht, die empfangen wurden, aufrechtzuerhalten;
das serviceseitige Zugangsschnittstellenmodul (12) dazu konfiguriert ist, Schnittstellen zur Positionszustands- und Anrufzustandssteuerung für den Kundenbetreuer bereitzustellen; wobei das Protokollstapelmodul (10) ein TSAPI-Protokollstapelmodul (101) und ein SIP-Protokollstapelmodul (102) umfasst und das Zustandsmaschinenmodul (11) ein Positionszustandsmaschinenmodul (111) und ein Anrufzustandsmaschinenmodul (112) umfasst, das TSAPI-Protokollstapelmodul (101) mit dem CTI-Server verbunden ist und das SIP-Protokollstapelmodul (102) mit der ACD verbunden ist, das serviceseitige Zugangsschnittstellenmodul (12) speziell dazu konfiguriert ist, eine Anrufvorgangsanforderung zu empfangen;
das Positionszustandsmaschinenmodul (111) dazu konfiguriert ist, zu beurteilen, ob ein Vorgang der Anrufvorgangsanforderung derzeit durchgeführt werden kann, und wenn ja, die Anrufvorgangsanforderung an den CTI-Server über das TSAPI-Protokollstapelmodul (101) zu senden;
das Positionszustandsmaschinenmodul (111) ferner dazu konfiguriert ist, nach dem Empfangen einer vom CTI-Server gesendeten Vorgangsinitiierungsbestätigungsnachricht eine entsprechende Umschaltung in den Positionszustand vorzunehmen und ein entsprechendes Vorgangsergebnis an eine derzeit durch eine Position geöffnete Vorgangsseite über das serviceseitige Zugangsschnittstellenmodul (12) zu senden;
das SIP-Protokollstapelmodul (102) dazu konfiguriert ist, nach dem Empfangen eines von der ACD gesendeten Anrufvorgangsbefehls eine entsprechende Medienstromsteueranweisung an das RTP-Protokollstapelmodul (13) zu senden und gleichzeitig das Anrufzustandsmaschinenmodul über den Anrufvorgangsbefehl zu informieren;
das RTP-Protokollstapelmodul (13) dazu konfiguriert ist, nach dem Empfangen der Medienstromsteueranweisung einen entsprechenden Medienstromsteuervorgang durchzuführen;
das Anrufzustandsmaschinenmodul (112) dazu konfiguriert ist, nach dem Empfangen des Anrufvorgangsbefehls eine entsprechende Umschaltung in den Anrufzustand vorzunehmen und danach an die ACD eine Vorgangsabschlussbestätigungsnachricht über das SIP-Protokollstapelmodul (102) zurückzugeben;
das TSAPI-Protokollstapelmodul (101) dazu konfiguriert ist, nach dem Empfangen der vom CTI-Server gesendeten Vorgangsabschlussbenachrichtigungsnachricht eine entsprechende Umschaltung in den Positionszustand vorzunehmen und eine Vorgangsabschlussbenachrichtigungsnachricht an die derzeit durch die Position geöffnete Vorgangsseite über das serviceseitige Zugangsschnittstellenmodul zu senden.

2. Hintergrund-Serviceprozess-Einheit nach Anspruch 1, wobei
das TSAPI-Protokollstapelmodul (101), das mit dem CTI-Server über ein IP-Netz verbunden ist, zudem dazu konfiguriert ist, eine TSAPI-Verbindung zu erzeugen und freizugeben, eine TSAPI-Nachricht zu senden und zu empfangen, eine Bestätigung des Sendens der Nachricht und einen Inhalt einer empfangenen Nachricht zu analysieren und eine analysierte Nachricht an das Positionszustandsmaschinenmodul zur Verarbeitung zu übermitteln;
das SIP-Protokollstapelmodul (102) mit der ACD über ein IP-Netz verbunden ist und ferner dazu konfiguriert ist, eine SIP-Nachricht zu senden und zu empfangen, die empfangene SIP-Nachricht zu analysieren und die analysierte SIP-Nachricht an das Anrufzustandsmaschinenmodul zur Verarbeitung zu übermitteln;
das Positionszustandsmaschinenmodul (111) ferner dazu konfiguriert ist, den Zustand einer Position gemäß einer empfangenen TSAPI-Nachricht aufrechtzuerhalten und eine Steuerung und Abfrage des Positionszustands bereitzustellen; das Anrufzustandsmaschinenmodul (112) ferner dazu konfiguriert ist, den Zustand eines Anrufs gemäß einer TSAPI-Nachricht und einer SIP-Nachricht, die empfangen wurden, aufrechtzuerhalten und eine Anrufzustandsabfrage, einen Anrufsteuerungsvorgang und eine Vorgangsgültigkeitserkennung bereitzustellen.

3. Hintergrund-Serviceprozess-Einheit nach Anspruch 1 oder 2, wobei die Hintergrund-Serviceprozess-Einheit ferner umfasst: ein Protokollstapelmodul (15) für ein Dateiübertragungsprotokoll, FTP, und ein Aktualisierungserkennungsmodul (16); wobei
das FTP-Protokollstapelmodul (15) dazu konfiguriert ist, eine FTP-Dateiübertragungsfähigkeit bereitzustellen;
das Aktualisierungserkennungsmodul (16), das mit dem serviceseitigen Zugangsschnittstellenmodul (12) und dem FTP-Protokollstapelmodul (15) kommuniziert, dazu konfiguriert ist, regelmäßig einen FTP-Server über das FTP-Protokollstapelmodul (15) abzufragen, zu prüfen, ob eine Positionssoftware eine Aktualisierung aufweist, und falls eine Aktualisierung entdeckt wird, einen FTP-Vorgang zu initiieren, um die Aktualisierung herunterzuladen und eine neue Positionssoftware zu registrieren.

4. Hintergrund-Serviceprozess-Einheit nach Anspruch 2, wobei die Hintergrund-Serviceprozess-Einheit ferner ein Mediencodierungs- und -decodierungsmodul (14) umfasst; wobei
das RTP-Protokollstapelmodul (13) ferner dazu konfiguriert ist, Medienstrompakete unter Kontrolle des SIP-Protokollstapelmoduls (102) zu senden und zu empfangen und empfangene Mediendaten an ein Mediencodierungs- und -decodierungsmodul (14) zur Verarbeitung zu übermitteln;
das Mediencodierungs- und -decodierungsmodul (14), das mit dem RTP-Protokollstapelmodul (13) kommuniziert und für Codierungs- und Decodierungsvorgänge der Mediendaten zuständig ist, dazu konfiguriert ist, nachdem eine von einer Spracherfassungsvorrichtung erfasste Sprache in digitale Signale durch eine Sprachkarte umgewandelt wurde, eine Codierungskompression an den nach der Umwandlung erhaltenen digitalen Signalen durchzuführen, die digitalen Signale nach der Codierungskompression in einer RTP-Nachricht zu verkapseln, die dann an einen entsprechenden Knoten über das RTP-Protokollstapelmodul (13) gesendet wird, und decodierte Datenströme an die Sprachkarte zum Wiederherstellen und Synthetisieren und Wiedergeben über eine Sprachwiedergabevorrichtung zu übermitteln.

5. Hintergrund-Serviceprozess-Einheit nach Anspruch 1 oder 2, wobei die Hintergrund-Serviceprozess-Einheit ferner umfasst:
ein Datenzugangs-Clientmodul (17), das mit dem serviceseitigen Zugangsschnittstellenmodul (12) kommuniziert und dazu konfiguriert ist, eine Zugangsfunktion einer Positionssystemdatenbank für den Kundenbetreuer bereitzustellen, nachdem der Kundenbetreuer einen Datenabfragevorgang über eine Vorgangsseite initiiert hat;
wobei das serviceseitigen Zugangsschnittstellenmodul (12) ferner dazu konfiguriert ist, eine Zugangsschnittstelle der Positionssystemdatenbank für den Kundenbetreuer bereitzustellen.

6. Browserbasiertes Call-Center-Position-System, umfassend einen Browser (20), einen Server (21) zur Rechner-Telefonie-Integration, CTI, eine automatische Anrufverteilung, ACD (22), und die Hintergrund-Serviceprozess-Einheit (100) nach einem der Ansprüche 1-5, wobei
der Browser (20) dazu konfiguriert ist, eine Anrufvorgangsanforderung eines Kundenbetreuers an die Hintergrund-Serviceprozess-Einheit (100) über ein Schnittstellenzugangsobjekt unter Verwendung einer geöffneten Webvorgangsseite zu senden und dem Kundenbetreuer das Vorgangsergebnis oder die Vorgangsabschlussbenachrichtigung, das bzw. die von der Hintergrund-Serviceprozess-Einheit (100) über das Schnittstellenzugangsobjekt zurückgegeben wird, anzuzeigen;
der CTI-Server (21) dazu konfiguriert ist, nach dem Empfangen der Anrufvorgangsanforderung an die Hintergrund-Serviceprozess-Einheit (100) eine Vorgangsinitiierungsbestätigungsnachricht zurückzugeben und währenddessen die Anrufvorgangsanforderung an die ACD (22) zur Durchführung weiterzuleiten; und nachdem die ACD (22) den Anrufvorgang beendet hat, die von der ACD (22) gesendete Vorgangsabschlussbenachrichtigungsnachricht an die Hintergrund-Serviceprozess-Einheit (100) weiterzuleiten;
die ACD (22) dazu konfiguriert ist, nach dem Empfangen der vom CTI-Server (21) gesendeten Anrufvorgangsanforderung einen entsprechenden Anrufvorgangsbefehl an die Hintergrund-Serviceprozess-Einheit (100) über das SIP-Protokoll zu senden und an den CTI-Server (21) eine Vorgangsabschlussbenachrichtigungsnachricht zu senden, nachdem sie die von der Hintergrund-Serviceprozess-Einheit (100) zurückgegebene Vorgangsabschlussbestätigungsnachricht empfangen hat.

7. Browserbasiertes Call-Center-Position-System nach Anspruch 6, wobei
während eines Anmeldeprozesses einer Position,
der Browser (20) ferner dazu konfiguriert ist, eine Anmeldeanforderung eines Kundenbetreuers an die Hintergrund-Serviceprozess-Einheit (100) über eine geöffnete Webanmeldeseite zu senden und die aktuelle Webanmeldeseite in eine Webvorgangsseite umzuschalten, nachdem er eine zurückgegebene Anmeldeergebnisnachricht empfangen hat;
die Hintergrund-Serviceprozess-Einheit (100) ferner dazu konfiguriert ist, eine von einem Kundenbetreiber über einen Browser gesendete Anmeldeanforderung zu empfangen, zu beurteilen, ob der Kundenbetreuer den Anmeldevorgang derzeit durchführen kann, wenn ja, eine TSAPI-Protokollregistrierung bei dem CTI-Server (21) zu initiieren und einen entsprechenden Positionszustand einzustellen und eine SIP-Protokollregistrierung bei der ACD (22) zu initiieren, nachdem die TSAPI-Protokollregistrierung erfolgreich war, und einen entsprechenden Anrufzustand einzustellen und ein Anmeldeergebnis an die vom Kundenbetreuer geöffnete Webanmeldeseite zurückzugeben, nachdem die SIP-Protokollregistrierung erfolgreich war;
die Hintergrund-Serviceprozess-Einheit (100) ferner dazu konfiguriert ist, nach dem Empfangen der vom Kundenbetreuer gesendeten Anmeldeanforderung über den Browser (20), wenn beurteilt wird, ob der Kundenbetreuer den Anmeldevorgang derzeit durchführen kann, falls entdeckt wird, dass sich der Kundenbetreuer derzeit in einem Gesprächszustand befindet und die aktuelle Servicesitzung nicht mit einer Position verbunden ist, eine Nachricht zum Nachfragen, ob die Servicesitzung mit der geöffneten Anmeldeseite verbunden werden soll, zurückzugeben und beim Empfangen einer zurückgegebenen Verbindungsanforderung eine Verbindung für die Servicesitzung wiederherzustellen.

8. Verfahren zur Anrufsteuerung eines browserbasierten Call-Center-Position-Systems, **dadurch gekennzeichnet, dass** es folgende Schritte umfasst:
A, durch einen Browser Senden einer Vorgangsanforderung gemäß einem Kundenbetreuer an eine Hintergrund-Serviceprozess-Einheit (100) über eine Vorgangsseite;
B, durch die Hintergrund-Serviceprozess-Einheit (100) Empfangen der Vorgangsanforderung und Beurteilen, ob der Vorgang derzeit durchgeführt werden kann, wenn ja, Senden der Vorgangsanforderung an einen Server (21) zur Rechner-Telefonie-Integration, CTI; nach dem Empfangen einer vom CTI-Server (21) gesendeten Vorgangsinitiierungsbestätigungsnachricht Vornehmen eines entsprechenden Umschaltens in den Positionszustand und Senden eines entsprechenden Vorgangsergebnisses an die Vorgangsseite;
C, durch den CTI-Server (21) Weiterleiten der empfangenen Vorgangsanforderung an eine automatische Anrufverteilung, ACD (22), zur Durchführung und Weiterleiten einer von der ACD (22) gesendeten Vorgangsabschlussbenachrichtigungsnachricht an die Hintergrund-Serviceprozess-Einheit (100), nachdem die Vorgangsanforderung vollständig durchgeführt wurde;
D, durch die Hintergrund-Serviceprozess-Einheit (100) Vornehmen einer entsprechenden Umschaltung in einen Positionszustand gemäß der empfangenen Vorgangsabschlussbenachrichtigungsnachricht und Senden einer Vorgangsabschlussbenachrichtigungsnachricht an die Vorgangsseite;
wobei in Schritt C der konkrete Prozess für die ACD (22) zum Durchführen des Vorgangs wie folgt lautet: nach dem Empfangen der Vorgangsanforderung durch die ACD (22) Senden eines entsprechenden Vorgangsbefehls an die Hintergrund-Serviceprozess-Einheit (100) über ein Sitzungsinitiierungsprotokoll, SIP-Protokoll; nach dem Empfangen des Vorgangsbefehls durch die Hintergrund-Serviceprozess-Einheit (100) Durchführen eines entsprechenden Medienstromsteuervorgangs und Vornehmen eines entsprechenden Umschaltens in einen Anrufzustand, danach Zurückgeben einer Vorgangsabschlussbestätigungsnachricht an die ACD (22) über das SIP-Protokoll; nach dem Empfangen der Vorgangsabschlussbestätigungsnachricht durch die ACD (22) Senden einer Vorgangsabschlussbenachrichtigungsnachricht an den CTI-Server (21).

9. Verfahren nach Anspruch 8, wobei vor dem Schritt A das Verfahren ferner die folgenden Schritte umfasst:
durch den Browser Senden einer Anmeldeanforderung des Kundenbetreuers an die Hintergrund-Serviceprozess-Einheit (100) über eine Anmeldeseite;
durch die Hintergrund-Serviceprozess-Einheit (100) Empfangen der Anmeldeanforderung und Beurteilen, ob der Kundenbetreuer derzeit einen Anmeldevorgang durchführen kann, wenn ja, Initiieren einer Protokollregistrierung einer Telefonie-Service-Anwendungsprogrammierschnittstelle, TSAPI, bei dem CTI-Server (21), Einstellen eines entsprechenden Positionszustands und Initiieren einer SIP-Protokollregistrierung bei der ACD (22), nachdem die TSAPI-Protokollregistrierung erfolgreich war, und Einstellen eines entsprechenden Anrufzustands und Senden eines Anmeldeergebnisses an die Anmeldeseite, die durch die Position geöffnet ist, nachdem die SIP-Protokollregistrierung erfolgreich war.

10. Verfahren nach Anspruch 8 oder 9, wobei nach dem Empfangen der Anmeldeanforderung, wenn die Hintergrund-Serviceprozess-Einheit (100) beurteilt, ob der Kundenbetreuer den Anmeldevorgang derzeit durchführen kann, falls die Hintergrund-Serviceprozess-Einheit (100) entdeckt, dass sich der Kundenbetreuer derzeit in einem Gesprächszustand befindet und eine aktuelle Servicesitzung nicht mit dem Kundenbetreuer verbunden ist, die Hintergrund-Serviceprozess-Einheit (100) eine Nachricht zum Nachfragen, ob die Servicesitzung mit der Anmeldeseite verbunden werden soll, zurückgibt und beim Empfangen einer zurückgegebenen Verbindungsanforderung die Hintergrund-Serviceprozess-Einheit (100) eine Verbindung für die Servicesitzung wiederherstellt.

## Revendications

1. Unité de traitement de service de fond (100) pour un système de position de centre d'appels basé sur un navigateur, **caractérisé en ce qu'**elle comprend un module de pile de protocole (10), un module de machine à états (11), un module d'interface d'accès d'extrémité de service (12) et un module de pile de protocole de protocole en temps réel, RTP (13), dans laquelle le module de pile de protocole (10), connecté à un serveur d'intégration de téléphonie par informatique, CTI, et un distributeur d'appel automatique, ACD, est configuré pour envoyer et recevoir un message d'interface de programmation d'application de service de téléphonie, TSAPI, et un message de protocole d'ouverture de session, SIP, analyser un résultat d'envoi de message et un contenu d'un message reçu, et délivrer un message analysé au module de machine à états (11) pour le traitement ;
le module de machine à états (11), interfacé avec le module d'interface d'accès d'extrémité de service (12), est configuré pour fournir une détection de validité pour une opération d'un représentant de clientèle en fonction d'un état de position et/ou d'un état d'appel, et maintenir l'état de position et l'état d'appel en fonction du message TSAPI et du message SIP qui ont été reçus ;
le module d'interface d'accès d'extrémité de service (12) est configuré pour fournir des interfaces de commande d'état position et d'état d'appel pour le représentant de clientèle ; dans lequel le module de pile de protocole (10) comprend un module de pile de protocole TSAPI (101) et un module de pile de protocole SIP (102), et le module de machine à états (11) comprend un module de machine à états de position (111) et un module de machine à états d'appel (112), le module de pile de protocole TSAPI (101) est connecté au serveur CTI, et le module de pile de protocole SIP (102) est connecté à l'ACD,
le module d'interface d'accès d'extrémité de service (12) est configuré spécifiquement pour recevoir une requête d'opération d'appel ;
le module de machine à états de position (111) est configuré pour juger si une opération de la requête d'opération d'appel peut être effectuée actuellement, dans l'affirmative, envoyer la requête d'opération d'appel au serveur CTI par l'intermédiaire du module de pile de protocole TSAPI (101) ;
le module de machine à états de position (111) est également configuré pour, après la réception d'un message de confirmation de lancement d'opération envoyé par le serveur CTI, effectuer une commutation correspondante à l'état de position, et envoyer un résultat d'opération correspondant à une page d'opération actuellement ouverte par une position par l'intermédiaire du module d'interface d'accès d'extrémité de service (12) ;
le module de pile de protocole SIP (102) est configuré pour, après la réception d'une commande d'opération d'appel envoyée par l'ACD, envoyer une instruction de commande de flux multimédia correspondant au module de pile de protocole RTP (13), et informer simultanément le module de machine à états d'appel de la commande d'opération d'appel ;
le module de pile de protocole RTP (13) est configuré pour, après la réception de l'instruction de commande de flux multimédia, d'effectuer une opération de commande de flux multimédia correspondante ;
le module de machine à états d'appel (112) est configuré pour, après la réception de la commande d'opération d'appel, d'effectuer une commutation correspondante à l'état d'appel, renvoyer ensuite à l'ACD un message de confirmation d'achèvement d'opération par l'intermédiaire du module de pile de protocole SIP (102) ;
le module de pile de protocole TSAPI (101) est configuré pour, après la réception du message de notification d'achèvement d'opération envoyé par le serveur CTI, d'effectuer une commutation correspondante à l'état de position, et d'envoyer un message de notification d'achèvement d'opération à la page d'opération ouverte actuellement par la position par l'intermédiaire du module d'interface d'accès d'extrémité de service.

2. Unité de traitement de service de fond selon la revendication 1, dans laquelle
le module de pile de protocole TSAPI (101) est connecté ay serveur CTI par l'intermédiaire d'un réseau IP, et est également configuré pour créer et libérer une connexion TSAPI, envoyer et recevoir un message TSAPI, analyser un accusé de réception de transmission de message et d'un contenu d'un message reçu, et délivrer un message analysé au module de machine à états de position pour le traitement ;
le module de pile de protocole SIP (102) est connecté à l'ACD par l'intermédiaire d'un réseau IP, est également configuré pour envoyer et recevoir un message SIP, analyser le message SIP reçu, et délivrer le message SIP analysé au module de machine à états d'appel pour le traitement ;
le module de machine à états de position (111) est également configuré pour maintenir l'état d'une position en fonction d'un message TSAPI reçu et fournir une commande et une interrogation de l'état de position ;
le module de machine à états d'appel (112) est également configuré pour maintenir l'état d'un appel en fonction d'un message TSAPI et d'un message SIP qui ont été reçus, fournir une interrogation d'état d'appel, une opération de commande d'appel et une détection de validation d'opération.

3. Unité de traitement de service de fond selon la revendication 1 ou 2, dans laquelle l'unité de traitement de service de fond comprend en outre : un module de pile de protocole de protocole de transfert de fichiers, FTP, (15) et un module de détection de mise à jour (16) ; dans lequel
le module de pile de protocole FTP (15) est configuré pour fournir une capacité de transfert de fichiers FTP ;
le module de détection de mise à jour (16), communiquant avec le module d'interface d'accès d'extrémité de service (12) et le module de pile de protocole FTP (15), configuré pour interroger régulièrement un serveur FTP à par l'intermédiaire du module de pile de protocole FTP (15), vérifier si un logiciel de position a une mise à jour et, si une mise à jour est découverte, lancer une opération FTP pour télécharger la mise à jour et enregistrer un nouveau logiciel de position.

4. Unité de traitement de service de fond selon la revendication 2, dans laquelle l'unité de traitement de service de fond comprend en outre un module de codage et décodage multimédia (14) ; dans laquelle
le module de pile de protocole RTP (13) est également configuré pour envoyer et recevoir des paquets de flux multimédia sous le contrôle du module de pile de protocole SIP (102), et délivrer des données multimédias reçues à un module de codage et décodage multimédia (14) pour le traitement ;
le module de codage et décodage multimédia (14), communiquant avec le module de pile de protocole RTP (13) et responsable d'opérations de codage et de décodage des données multimédias, configuré pour, après qu'une voix capturée par un dispositif de capture de voix soit convertie en signaux numériques par une carte vocale, effectuer une compression de codage sur les signaux numériques obtenus après la conversion, encapsuler les signaux numériques après la compression de codage dans un message RTP, qui est envoyé ensuite à un noeud correspondant par le biais du module de pile de protocole RTP (13), et délivrer des flux de données décodés à la carte vocale pour la restauration et la synthèse et la lecture par l'intermédiaire d'un dispositif de lecture vocale.

5. Unité de traitement de service de fond selon la revendication 1 ou 2, dans laquelle l'unité de traitement de service de fond comprend en outre :
un module de client d'accès aux données (17), communiquant avec le module d'interface d'accès d'extrémité de service (12) configuré pour fournir une fonction d'accès d'une base de données de système de position pour le représentant de clientèle après que le représentant de clientèle lance une opération d'interrogation de données par l'intermédiaire d'une page d'opération ;
le module d'interface d'accès d'extrémité de service (12) est en outre configuré pour fournir une interface d'accès de la base de données de système de position pour le représentant de clientèle.

6. Système de position de centre d'appels basé sur un navigateur, comprenant un navigateur (20) un serveur d'intégration de téléphonie par informatique, CTI, (21), un distributeur d'appel automatique, ACD, (22) et l'unité de traitement de service de fond (100) selon l'une quelconque des revendications 1 à 5, dans lequel
le navigateur (20) est configuré pour envoyer une requête d'opération d'appel d'un représentant de clientèle à l'unité de traitement de service de fond (100) par l'intermédiaire d'un objet d'accès d'interface en utilisant une page d'opération Web ouverte, et montrer au représentant de clientèle le résultat d'opération ou une notification d'achèvement d'opération renvoyée par l'unité de traitement de service de fond (100) par l'intermédiaire de l'objet d'accès d'interface ;
le serveur CTI (21) est configuré pour, après la réception de la requête d'opération d'appel, renvoyer à l'unité de traitement de service de fond (100) un message de confirmation de lancement d'opération, et entre-temps transférer la requête d'opération d'appel à l'ACD (22) pour l'exécution ; et, après que l'ACD (22) finit l'opération d'appel, transférer le message de notification d'achèvement d'opération envoyé par l'ACD (22) à l'unité de traitement de service de fond (100) ;
l'ACD (22) est configuré, après la réception de la requête d'opération d'appel envoyée par le serveur CTI (21), envoyer une commande d'opération d'appel correspondante à l'unité de traitement de service de fond (100) par l'intermédiaire du protocole SIP, et envoyer au serveur CTI (21) un message de notification d'achèvement d'opération après la réception du message de confirmation d'achèvement d'opération renvoyé par l'unité de traitement de service de fond (100).

7. Système de position de centre d'appels basé sur un navigateur selon la revendication 6, dans lequel
durant un processus de connexion d'une position,
le navigateur (20) est configuré en outre pour envoyer une demande de connexion d'un représentant de clientèle à l'unité de traitement de service de fond (100) par l'intermédiaire d'une page de connexion Web ouverte, et commuter la page de connexion Web actuelle à une page d'opération Web après la réception d'un message de résultat de connexion renvoyé ;
l'unité de traitement de service de fond (100) est en outre configurée pour recevoir une requête de connexion envoyée par un représentant de clientèle par l'intermédiaire d'un navigateur, juger si le représentant de clientèle peut réaliser l'opération de connexion actuellement, dans l'affirmative, lancer un enregistrement de protocole TSAPI au serveur CTI (21) et régler un état de position correspondant et lancer un enregistrement de protocole SIP à l'ACD (22) après que l'enregistrement de protocole TSAPI a réussi, et régler un état d'appel correspondant et renvoyer un résultat de connexion à la page de connexion Web ouverte par le représentant de clientèle après que l'enregistrement de protocole SIP a réussi ;
l'unité de traitement de service de fond (100) est en outre configurée pour, après la réception de la requête de connexion envoyée par le représentant de clientèle par l'intermédiaire du navigateur (20), lors du jugement si le représentant de clientèle peut effectuer l'opération de connexion actuellement, s'il est découvert que le représentant de clientèle est actuellement dans un état de conversation et la session de service actuelle n'est pas connectée à une position, renvoyer un message d'invite si se connecter à la session de service à la page de connexion ouverte et, lors de la réception d'une requête de connexion renvoyé, recréer une connexion pour la session de service.

8. Procédé pour une commande d'appel d'un système de position de centre d'appels basé sur un navigateur, **caractérisé en ce qu'**il comprend les étapes suivantes :
A, l'envoi par un navigateur d'une requête d'opération en fonction d'un représentant de clientèle à une unité de traitement de service de fond (100) par l'intermédiaire d'une page d'opération ;
B, la réception par l'unité de traitement de service de fond (100) de la requête d'opération, et le jugement si l'opération peut être réalisée actuellement, dans l'affirmative, l'envoi de la requête d'opération à un serveur d'intégration de téléphonie par informatique, CTI, (21) ; après la réception d'un message de confirmation de lancement d'opération envoyé par le serveur CTI (21), l'exécution d'une commutation correspondante à l'état de position, et l'envoi d'un résultat d'opération correspondant à la page d'opération ;
C, le transfert par le serveur CTI (21) de requête d'opération reçue à un distributeur automatique d'appel, ACD (22), pour l'exécution, et le transfert d'un message de notification d'achèvement d'opération envoyé par l'ACD (22) à l'unité de traitement de service de fond (100) après que la requête d'opération est réalisée complètement ;
D, l'exécution par l'unité de traitement de service de fond (100) d'une commutation correspondante à un état de position en fonction du message de notification d'achèvement d'opération reçu, et l'envoi d'un message de notification d'achèvement d'opération à la page d'opération ;
dans lequel, dans l'étape C, le processus spécifique pour l'ACD (22) pour réaliser l'opération est comme suit : après la réception de la requête d'opération, l'envoi par l'ACD (22) d'une commande d'opération correspondante à l'unité de traitement de service de fond (100) par l'intermédiaire d'un protocole de protocole d'ouverture de session, SIP ; après la réception de la commande d'opération, l'exécution par l'unité de traitement de service de fond (100) d'une opération de commande de flux multimédia correspondante, et l'exécution d'une commutation correspondante à un état d'appel, ensuite le renvoi d'un message de confirmation d'achèvement d'opération à l'ACD (22) par l'intermédiaire du protocole SIP ; après la réception du message de confirmation d'achèvement d'opération, l'envoi par l'ACD (22) d'un message de notification d'achèvement d'opération au serveur CTI (21).

9. Procédé selon la revendication 8, dans lequel, avant l'étape A, le procédé comprend en outre les étapes suivantes :
l'envoi par le navigateur d'une requête de connexion du représentant de clientèle à par l'unité de traitement de service de fond (100) par l'intermédiaire d'une page de connexion ;
la réception par l'unité de traitement de service de fond (100) de la requête de connexion et le jugement si le représentant de clientèle peut réaliser une opération de connexion immédiatement, dans l'affirmative, le lancement d'un enregistrement de protocole d'interface de programmation d'application de service de téléphonie, TSAPI au serveur CTI (21), le réglage d'un état de position correspondant et le lancement d'un enregistrement de protocole SIP à l'ACD (22) après que l'enregistrement de protocole TSAPI a réussi, et le réglage d'un état d'appel correspondant et l'envoi d'un résultat de connexion à la page de connexion qui est ouverte par la position après que l'enregistrement de protocole SIP a réussi.

10. Procédé selon la revendication 8 ou 9, dans lequel, après la réception de la requête de connexion, quand l'unité de traitement de service de fond (100) juge si le représentant de clientèle peut effectuer l'opération de connexion actuellement, si l'unité de traitement de service de fond (100) découvre que le représentant de clientèle est actuellement dans un état de conversation et une session de service actuelle n'est pas connectée au représentant de clientèle, l'unité de traitement de service de fond (100) renvoi un message pour inviter si se connecter à la session de service à la page de connexion et, lors de la réception d'une requête de connexion renvoyée, l'unité de traitement de service de fond (100) recrée une connexion pour la session de service.
